# DEMANDE DE BREVET EUROPEEN

(11) **EP 2 090 469 A1**
(43) Date de publication de la demande: **19.08.2009**
(21) Numéro de dépôt: 09305106.8
(22) Date de dépôt: 05.02.2009
(51) Int. Cl.: B60R 13/02, F16B 5/06, B62D 65/14, B60J 10/08

(54) **Agencement d'un élément de garniture sur un cadre de porte**

(30) Priorité: 13.02.2008 FR 0850900
(71) Demandeur: Renault s.a.s., 92100 Boulogne-Billancourt (FR)
(72) Inventeur: Martz, Philippe H., 78990 Elancourt (FR); Mossu, Stéphane, 78114 Magny-les-Hameaux (FR)

(57) **Abrégé**

Agencement d'un élément de garniture (14) sur un cadre de porte (10) de véhicule automobile, comprenant une feuillure (12) et un joint (18) chaussé sur ladite feuillure (12) et comportant une patte latérale (22) venant en appui sur une face externe (24) du bord (16) de l'élément de garniture (14), **caractérisé en ce que** l'agencement comporte au moins une agrafe (26) liant le bord (16) de l'élément de garniture (14) à la feuillure (12), de manière à limiter le déplacement du bord (16) de l'élément de garniture (14) sous l'effet d'une dilatation.

## Description

L'invention concerne un agencement d'un élément de garniture sur un cadre de porte de véhicule automobile, comprenant une feuillure et un joint chaussé sur ladite feuillure comportant une patte latérale venant en appui sur une face externe d'un bord de l'élément de garniture.

A l'intérieur d'un véhicule, les éléments de garniture, qui sont pour la plupart de temps en matière plastique, sont souvent soumis à un ensoleillement important, ce qui peut entraîner en raison de leur dilatation, des déformations qui peuvent être particulièrement inesthétiques et donner ainsi une mauvaise impression quant à la qualité perçue du véhicule à l'utilisateur.

C'est le cas en particulier du bord de la garniture de custode, qui, en étant en appui contre une patte latérale du joint de porte risque de se déplacer en cas d'ensoleillement et donc de se soulever.

Il faut de plus tenir compte d'un environnement restreint.

Afin de pallier ces inconvénients, l'invention a pour objet un agencement d'un élément de garniture ayant une meilleure tenue à l'ensoleillement.

A cet effet, l'invention propose un agencement d'un élément de garniture du type cité ci-dessus, caractérisé en ce que l'agencement comporte au moins une agrafe liant le bord de l'élément de garniture à la feuillure, de manière à limiter le déplacement du bord de l'élément de garniture sous l'effet d'une dilatation.

Selon d'autres caractéristiques de l'invention:
- L'agrafe présente sensiblement la forme d'un U, une première branche de l'agrafe étant prise entre la feuillure et une portion du joint chaussée sur ladite feuillure, et une deuxième branche de l'agrafe comportant un crochet tourné vers l'extérieur et coopérant avec la face externe du bord de l'élément de garniture.
- Une face extérieure de la deuxième branche de l'agrafe comporte au moins une griffe de maintien apte à coopérer avec une face interne du bord de l'élément de garniture.
- La griffe coopère avec le bord de l'élément de garniture par enfoncement dans la face interne dudit bord.
- La griffe est une patte dirigée vers l'extrémité libre de la deuxième branche.

D'autres caractéristiques et avantages de l'invention apparaîtront à la lecture de la description d'exemples de réalisation d'un agencement d'un élément de garniture en référence aux dessins annexés dans lesquels :

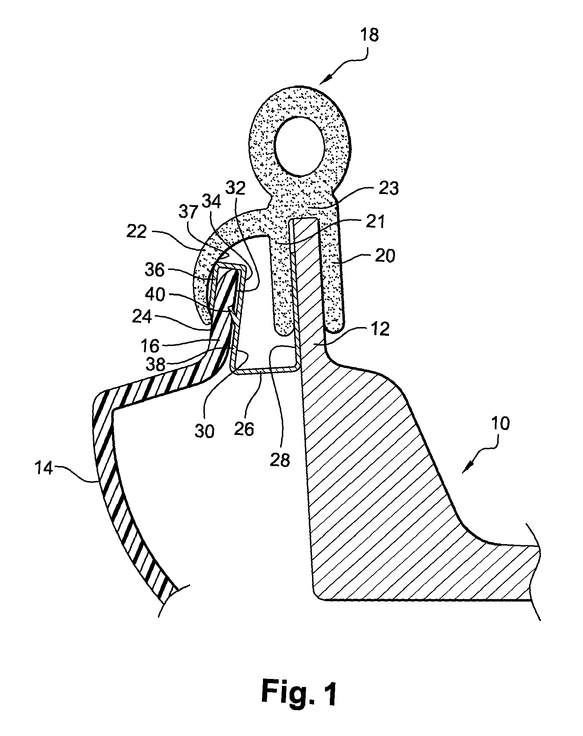

- La figure 1 est une vue d'un agencement d'un élément de garniture selon l'invention.

Dans la description qui suit, nous prendrons à titre non limitatif une orientation longitudinale, verticale et transversale indiquée par le trièdre L,V,T de la figure 1.

Des éléments ou analogues sont désignés par les mêmes chiffres de référence.

Tel que représenté à la figure 1, un cadre de porte 10 comporte une feuillure 12, qui est cachée par un élément de garniture 14. Dans le cas décrit ici, l'élément de garniture 14 est une garniture de custode.

Nous considérerons dans la suite de la description que la zone située, sur la figure 1, à de la garniture 14 est « l'extérieur » et que la zone située à droite du cadre de porto 10 est « l'intérieur ».

L'élément de garniture 14 comporte un bord 16, sensiblement parallèle à la feuillure 12.

Un joint 18 de porte comporte sur sa longueur une portion 20 en forme de U apte à coopérer avec la feuillure 12. La portion 20 présente une branche interne 21 i et une branche externe 21e, reliées par une base 23. La base 23 de la portion 20 est liée au joint 18.

Le joint de porte 18 comporte également une patte latérale 22 s'étendant depuis la base 23, à distance de branche externe 21e de la portion 20 du joint 18. La patte latérale 22 est apte à venir en appui contre une face externe 24 du bord 16 de l'élément de garniture.

De manière à éviter un soulèvement du bord 16 de l'élément de garniture 14 sous l'effet de l'ensoleillement, il est prévu une agrafe 26 de maintien de l'élément de garniture 14 sur la feuillure 12.

L'agrafe 26 qui est métallique, présente sensiblement la forme d'un U dont une première branche 28 s'étend entre la feuillure 12 et branche externe 21e de la portion 20 du joint 18 chaussée sur ladite feuillure 12.

L'agrafe 26 comporte une deuxième branche 30, s'étendant le long d'une face interne 32 du bord 16 de l'élément de garniture 14. La deuxième branche 30 de l'agrafe 26 présente en outre, à son extrémité libre 34, un crochet 36, tourné vers l'extérieur. Le crochet 36 coopère avec la face externe 24 du bord 16 de l'élément de garniture 14 et avec une face interne 37 de la patte 22 du joint 18.

Ainsi, l'élément de garniture 14 est maintenu et ne peut pas se soulever.

Afin d'améliorer le maintien du bord 16 de l'élément de garniture 14, une face externe 38 de la deuxième branche 30 de l'agrafe 26 comporte au moins une griffe 40 apte à venir en appui contre la face interne 32 du bord 16 de l'élément de garniture 14, La griffé 40 présente la forme d'une patte dirigée vers l'extrémité libre 34 de la deuxième branche 30, L'élément de garniture 14 étant en matière plastique, la griffe 40 peut s'enfoncer dans la face interne 32 de manière à s'y accrocher.

De manière à améliorer le maintien du bord 16 de l'élément de garniture 14, il peut être prévu deux griffes 40 de part et d'autre de la face externe 38 de la deuxième branche 30 de l'agrafe 26.

Dans l'exemple de réalisation décrit ici, l'agencement ne comporte qu'une seule agrafe 26. Cependant, selon les contraintes liées à l'architecture du véhicule, l'agencement peut comporter plusieurs agrafes réparties sur la longueur de l'élément de garniture.

L'agrafe 26 selon l'invention permet donc de maintenir efficacement l'élément de garniture 14 en cas d'ensoleillement, tout en présentant un encombrement réduit.

## Revendications

1. Agencement d'un élément de garniture (14) sur un cadre de porte (10) de véhicule automobile, comprenant une feuillure (12) et un joint (18) chaussé sur ladite feuillure (12) et comportant une patte latérale (22) venant en appui sur une face externe (24) du bord (16) de l'élément de garniture (14), **caractérisé en ce que** l'agencement comporte au moins une agrafe (26) liant le bord (16) de l'élément de garniture (14) à la feuillure (12), de manière à limiter le déplacement du bord (16) de l'élément de garniture (14) sous l'effet d'une dilatation.

2. Agencement d'un élément de garniture selon la revendication 1, **caractérisé en ce que** l'agrafe (26) présente sensiblement la forme d'un U, une première branche (28) de l'agrafe (26) étant prise entre la feuillure (12) et une portion (20) du joint (18 chaussée sur ladite feuillure (12), et une deuxième branche (30) de l'agrafe (26) comportant un crochet (36) tourné vers l'extérieur et coopérant avec la face externe (24) du bord (16) de l'élément de garniture (14).

3. Agencement d'un élément de garniture (14) selon la revendication précédente, **caractérisé en ce qu'**une face extérieure (38) de la deuxième branche (30) de l'agrafe (26) comporte au moins une griffe de maintien (40) apte à coopérer avec une face interne (32) du bord (16) de l'élément de garniture (14).

4. Agencement d'un élément de garniture (14) selon la revendication précédente, **caractérisé en ce que** la griffe (40) coopère avec le bord (16) de l'élément de garniture (14) par enfoncement dans la face interne (32) dudit bord (16).

5. Agencement d'un élément de garniture (14) selon la revendication précédente, **caractérisé en ce que** la griffe (40) est une patte dirigée vers l'extrémité libre (34) de la deuxième branche (30).
